# EUROPEAN PATENT SPECIFICATION

(11) **EP 3 901 450 B1**
(45) Date of publication and mention of the grant of the patent: **30.08.2023**
(21) Application number: 21169387.4
(22) Date of filing: 20.04.2021
(51) Int. Cl.: F03D 1/00

(54) **NACELLE FRAME STRUCTURE FOR A NACELLE OF A WIND TURBINE**
GONDELRAHMENSTRUKTUR FÜR EINE GONDEL EINER WINDTURBINE
STRUCTURE DE CADRE DE NACELLE POUR UNE NACELLE D'UNE ÉOLIENNE

(30) Priority: 21.04.2020 IN 202021017146
(43) Date of publication of application: 27.10.2021
(73) Proprietor: Hoffmann, Maik, 18055 Rostock (DE); Schemik, Mario, 18069 Rostock (DE)
(72) Inventor: Hoffmann, Maik, 18055 Rostock (DE); Schemik, Mario, 18069 Rostock (DE)
(74) Representative: Grünbaum, Annekathrin

(56) References cited:
- US-A1- 2011 101 699
- US-A1- 2019 127 969

## Description

### FIELD OF INVENTION

The present invention is directed to a nacelle frame structure and a nacelle cover for a nacelle of a wind turbine.

### BACKGROUND

Nacelle frame structures for wind turbines exist since the very first beginning of producing electric power by the use of wind for example the so called Smith-Putnam-Anlage anno 1941 in Vermont, USA. Nearly every part of the frame support structures of modern wind turbines is party or fully welded. There are high quality and safety standards required for welded connections. The compliance with and review of these standards is associated with high costs.

US 2019/127969A1 discloses a nacelle of a wind turbine, the nacelle comprising a rear frame structure comprising a plurality of truss members, and a plurality of pivot joints. Each pivot joint interconnects ends of at least two truss members, thereby forming a truss structure with the pivot joints arranged in node points of the truss structure. At least some of the pivot joints are adjustable in such a manner that an angle between two truss members being interconnected via a pivot joint is adjustable by means of the pivot joint. Nacelles of varying dimensions can be provided using a limited number of basis components in the form of truss members and pivot joints. The pivot joints are moment neutral, and therefore bending moments are not introduced into the truss members.

US 2011/101699A1 discloses a wind turbine nacelle configuration includes a frame structure configured for mounting atop a wind turbine tower. The frame structure includes a base, side support members, and top support members. A shell is attached to the frame structure to enclose the nacelle. A drive train may be housed within the frame structure and includes a low speed rotor shaft connected to a gearbox, and a high speed shaft connecting the gearbox to a generator. The frame structure is configured so that at least one component of the drive train is suspended from the top support members within the frame structure.

### OBJECT OF THE INVENTION

An object of the present invention is to reduce to avoidance welded nacelle frame structures.

### SUMMARY OF THE INVENTION

For solving this object one aspect of the present invention is directed to a modular nacelle frame structure.

The modular nacelle frame structure for a nacelle of a wind turbine comprising a plurality of frame modules having an equal constructed front and a rear side wherein a rotor-sided frame module; at least one intermediate frame module, wherein one intermediate frame module is connected with the rotor-sided frame module and an end-sided frame module, which is connected to one of the intermediate frame module; and wherein in assembled condition and in front view the rotor sided frame module having a y-base profile extending in y-direction, a rotor-sided vertical profile, which is connected with the y-base profile via a base-sided corner connection point, a roof-sided horizontal profile, which one end is connected with the rotor-sided vertical profile via a roof-sided corner connection point, a vertical profile, which one end is connected with the opposite end of the roof-sided horizontal profile via a roof-sided connection point and a diagonal profile, which one end is connected to the roof-sided corner connection point and the other end is connected to a base-sided connection point; one of the intermediate frame module having a roof-sided horizontal profile, which is connected via the roof-sided connection point with the rotor-sided frame module, a vertical profile which is arranged between the end sides of the roof-sided horizontal profile via a roof-sided connection point and a base-sided connection point, and a diagonal profile, which is connected with the roof-sided connection point and the base-sided connection point; the end-sided frame module having a x-base profile extending in x-direction, which is connected with the intermediate frame module via the base-sided connection point a roof-sided horizontal profile, which is connected with the intermediate frame module via a roof-sided connection point, a vertical end profile, which is arranged between the end-sides of the x-base profile via a base-sided corner connection point and the roof-sided horizontal profile via a roof-sided corner connection point and a diagonal profile, which one end is connected to the roof-sided connection point and the other end is a base-sided corner connection point.

In content of the present invention the term assembled condition means that all inner components of the nacelle are mounted and without that a wind force applies to the nacelle.

Advantageously in case of two or more intermediate frame modules each frame module is arranged neighboring each other in x-direction between the rotor-sided frame module and the end-sided frame module. More advantageously in assembled condition inside the rotor sided module a main frame of wind turbine is arranged and inside at least one of the intermediate frame module a girder frame is arranged. More advantageously the nacelle frame structure comprises one to three intermediate frame modules, in particular two intermediate frame modules.

Advantageously the rotor-sided frame module, the one or more intermediate frame module and the end-sided frame module are connected neighboring in x-direction.

In particular the geometry and dimensions of the profiles depending of the use for example weight of the nacelle, transport requirements and so on.

In a preferred embodiment of the modular nacelle frame structure, in assembled condition and in front view the rotor sided frame module having a y-base profile extending in y-direction, a rotor-sided vertical tension profile, which function as tension rod and which is connected with the y-base profile via a base-sided corner connection point, a roof-sided horizontal tension profile, which function as tension rod and which one end is connected with the rotor-sided vertical tension profile via a roof-sided corner connection point, a vertical pressure profile, which function as pressure rod and which one end is connected with the a opposite end of the roof-sided horizontal tension profile via a roof-sided connection point and a diagonal pressure profile, which function as pressure rod and which one end is connected to the roof-sided corner connection point and the other end is connected to another end of the vertical pressure profile via a base-sided connection point; one of the intermediate frame module having a roof-sided horizontal tension profile, which function as tension rod and which is connected via the roof-sided connection point with the rotor-sided frame module, a vertical pressure profile, which function as pressure rod and which is arranged between the end sides of the roof-sided horizontal tension profile via a roof-sided connection point and a base-sided connection point and a diagonal tension profile, which function as tension rod and which is connected with the roof-sided connection point and the base-sided connection point; and the end-sided frame module having a x-base pressure profile extending in x-direction, which function as pressure rod and which is connected with the intermediate frame module via the base-sided connection point, a roof-sided horizontal neutral profile, which function as neutral rod and which is connected with the inter-mediate module via a roof-sided connection point, a vertical neutral end profile, which function as neutral rod and which is arranged between the end-sides of the x-base pressure profile via a base-sided corner connection point and the roof-sided horizontal neutral profile via a roof-sided corner connection point and a diagonal tension profile, which function as tension rod and which one end is connected to the roof-sided connection point and the other end is a base-sided corner connection point.

Advantageously in front view the diagonal profiles extending from the left hand roof-side corner to the right hand base-sided corner.

In a further preferred embodiment the roof-sided connection point having a trapezoidal design, wherein at a middle area and at a right hand a side is a plurality of bores arranged for connecting a profile.

In a further preferred embodiment of the modular nacelle frame structure, the base-sided connection point having a V-shaped design, wherein at a middle area and at a left hand-sided area are a plurality of bores are arranged for connecting a profile.

In a further preferred embodiment of the modular nacelle frame structure, the base-sided corner connection point having a V-shaped design, wherein at a middle area and at a left hand-sided area are a plurality of bores are arranged for connecting a profile.

In a further preferred embodiment of the modular nacelle frame structure, the roof-sided corner connection point having an angularly shaped design, in particular rectangular, wherein at a vertical area and at a horizontal area are a plurality of bores are arranged for connecting a profile.

In a further preferred embodiment of the modular nacelle frame structure, at the roof-side of each frame module has a y-roof profile extending in y direction for connecting the horizontal roof-sided profiles of each frame module and between the y-roof profiles diagonal roof profiles are arranged.

In a further preferred embodiment of the modular nacelle frame structure, a base frame of the end-sided module comprises a two x-base profiles, in particular pressure profiles, at least two y-base profiles extending in y direction, wherein one y-base profile is arranged in the middle area of the end-sided frame module and the other y-base profile is arranged at the end portion of the end frame module, and crossed diagonal profiles, wherein these are arranged between the y-base profile and the y-base profile.

In a further preferred embodiment of the modular nacelle frame structure, each of the profiles and each of the connection point are bolted connections.

In a further preferred embodiment of the modular nacelle frame structure, a crane lift heavy components of a wind turbine is arranged within the nacelle frame structure therefore c-profiles are arranged at the roof sided horizontal profiles, wherein the c-profiles having an inner tread for the crane.

In a further preferred embodiment of the modular nacelle frame structure, a crossbeam is arranged between the c-profiles and wherein at the crossbeam the crane hoists can be mounted to disassemble the component of a wind turbine and bring them into a horizontal transport position. In a further preferred embodiment of the modular nacelle frame structure, for reducing the nacelle height, sidewise of the crossbeam rails for trolleys and at least one winch are arranged.

A further aspect of the invention is directed to a nacelle cover.

The nacelle cover for covering a nacelle frame structure of a wind turbine comprises a plurality of cover plates, wherein each of the cover plate is directly mounted to the modular nacelle frame structure as claimed in claim 1 via a holder system

Advantageously the arrangement of the profiles provides a full maintainability of the bolt connections.

In a preferred embodiment of the nacelle cover, the holder system comprises a plurality of cover connections, which are distribute arranged over the modular frame structure, wherein the cover connections are flexible for compensating stress due to tolerances between the modular nacelle frame structure and nacelle cover. In particular, the cover connection comprises a shim plate and a fillet plate for fixing the cover plate.

A further aspect of the invention is directed to a nacelle of a wind turbine.

The nacelle of a wind turbine comprises a main frame, a girder frame and modular nacelle frame structure according to one of the aforesaid embodiments, wherein the main frame is arranged inside the rotor-sided frame module and the girder frame is arranged inside at least one intermediate frame module and a nacelle cover according to the aforesaid embodiments.

A further aspect of the invention is directed to a wind turbine.

The wind turbine has a nacelle according to the aforesaid embodiment.

A further aspect of the invention is directed to a method for producing electrical power by providing said wind turbine.

It should be cleared out that also a combination of the several aspects of the invention is possible.

The present invention a has the following not completed advantages, namely
- Standard profile will be used and due to the innovative design the type profiles can easily adapted to the respective standard of the country.
- The modular nacelle frame structure carries the loads of the generator, the cabinet and transformer as well as increases the overall stiffness of the nacelle body. Due to the optimized flux of force, the weight of the girder frame and the whole nacelle will be reduced.
- The loads of the nacelle (wind loads, loads due to weight and oscillation) are nearly completely decoupled from the main bearings and due to this design the main bearing lifetime can be increased.
- Due to the minor influence of the wind loads in front of the nacelle, the upper lifting eye of the mainframe can be used for the nacelle cover connection, the shim and/or fillet plates for the profiles will be used to introduce the sidewise wind loads, which safes the crossbeam of the crane.
- Loads will be introduced with an optimal flux of force into the tower.
- Due to the modular design a modular structure for different turbine configurations is possible, e.g. turbines with or without transformer on top can easily be realized.

### BRIEF DESCRIPTION OF DRAWINGS

The invention will now be explained in more detail with respect to exemplary embodiments with reference to the enclosed drawings, wherein:
- **Figure 1**: a wind turbine (PRIOR ART);
- **Figure 2**: a perspective view of a modular nacelle frame structure;
- **Figure 3**: a front-view of the modular nacelle frame structure according to Fig. 2;
- **Figure 3A**: a front-view of the modular nacelle frame structure according to Fig. 3 with acting forces;
- **Figure 4**: a top-view of the modular nacelle frame structure according to Fig. 2;
- **Figure 5**: a side-view of an end-sided frame module of the modular nacelle frame structure according to Fig. 2;
- **Figure 6**: a detailed view of a roof-sided connection point of the modular nacelle frame structure according to Fig. 2;
- **Figure 7**: a perspective view of the modular nacelle frame structure according to Fig. 2 with assembled main frame and crane;
- **Figure 8**: a detailed section view of the crane according to Fig. 7;
- **Figure 9**: a perspective view of the modular nacelle frame structure according to Fig. 2 with assembled main frame and a partly assembled nacelle cover;
- **Figure 10**: a detailed section side-view of the nacelle cover according to Fig. 9;
- **Figure 11**: a detailed section rear-view of the nacelle cover according to Fig. 9 and
- **Figure 12**: a sectional view of the cover connection.

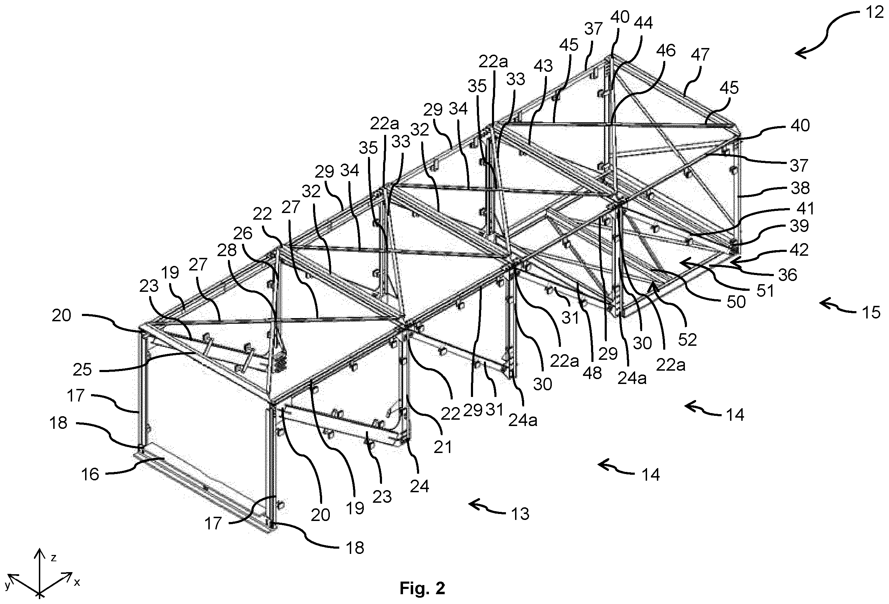

The foregoing and other aspects will become apparent from the following detailed description of the invention when considered in conjunction with the accompanying drawing figures. In order to facilitate positional relationships, a Cartesian xyz coordinate system is given in FIGS. 2 to 5 and Fig. 7 to 9. In content of the present invention a rear of the nacelle frame structure is defined as a side which is arranged in y-direction behind a front of a nacelle frame structure. Both sides are located in the xz plane.

### DETAILED DESCRIPTION OF THE INVENTION

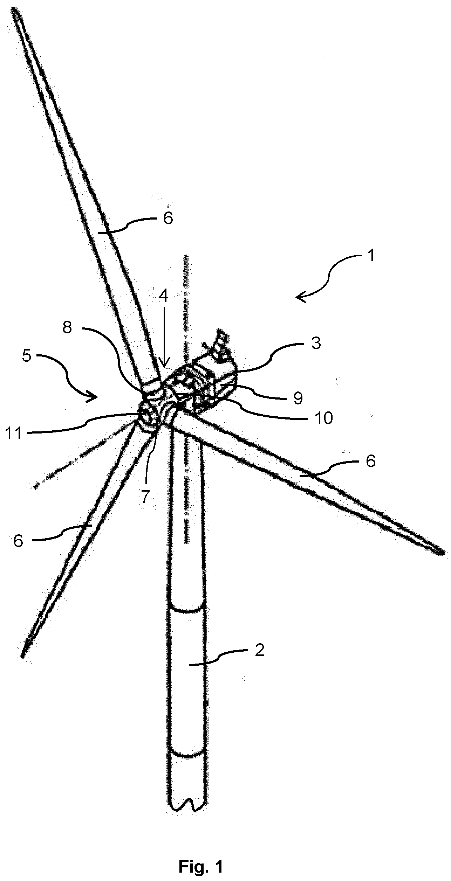

Figure 1 depicts a schematic view of a wind turbine (1) with a tower (2) and a nacelle (3). Depending on given requirements the wind turbine (1) can be used for offshore or onshore applications. The nacelle (3) is rotatable mounted on the tower (2). The nacelle (3) incorporates a number of components of a drive train chain (4) comprising a rotor shaft (not shown) for example. The nacelle (3) also incorporates a generator (not shown) connected with a plurality of electrical components (not shown). Further the nacelle (3) comprises a yaw system (not shown) for rotating the nacelle (3). Said rotor shaft is connected to a rotor (5). The rotor (5) comprises three rotor blades (6) which are mounted to a hub (7). The hub (7) is connected to the rotor shaft of the drive train chain (4). The rotor blades (6) are adjustably mounted on the hub (7). This is realized by means of pitch drives (8), said pitch drives (8) being part of a pitch system (not shown). The pitch system controls the rotor speed to given set points. By means of pitch-drives (8), the rotor blades (6) may be moved about a rotor blade (6) axes into different pitch positions, said rotor blade (6) axis extending in an axial direction of the rotor blades (6). Each rotor blade (6) is connected to the hub (7) via its pitch-drive (8). The nacelle (3) is covered by a nacelle cover (9), which has a nacelle cover interface (10). The hub (7) is covered by a spinner (11). It is also well known that inside the nacelle (3) a main frame and a girder frame is arranged.

Figs. 2 to 5 depict a perspective, front, top and side view of a modular nacelle frame structure (12). In the Cartesian xyz coordinate system of Fig. 2 the y-axis is 45° angled to the drawing plane and runs into it. The x-axis is rectangular to the y-axis and runs into the drawing plane. The z-axis runs upwards in Fig. 2.

The modular nacelle frame structure (12) comprising a plurality of frame modules (13, 14, 15) having a left and a right side as well as equal constructed front and a rear side wherein a rotor-sided frame module (13), two intermediate frame modules (14), wherein one intermediate frame module (14) is connected with the rotor-sided frame module (13) neighboring in x-direction and the second intermediate frame module (14) and is connected with the first intermediate frame module (14) neighboring in x-direction, and an end-sided frame module (15), which is connected to the second intermediate frame module (14) neighboring in x-direction.

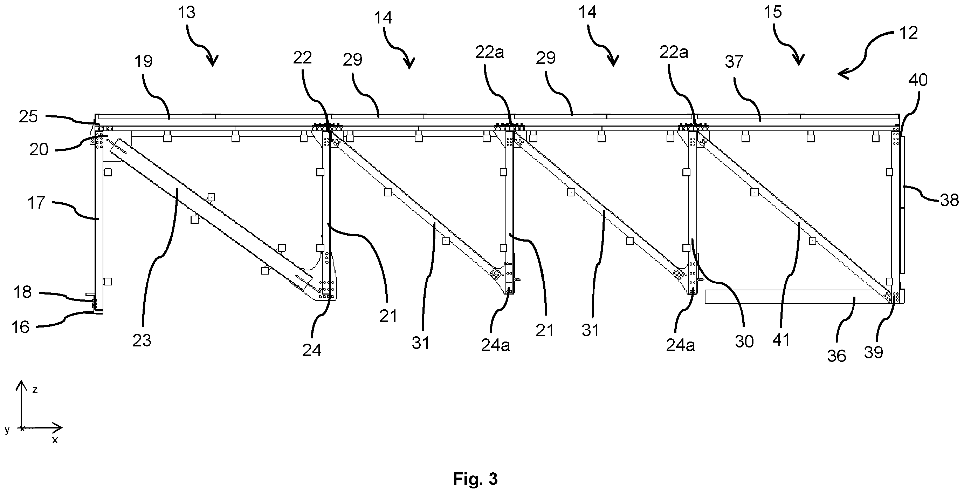

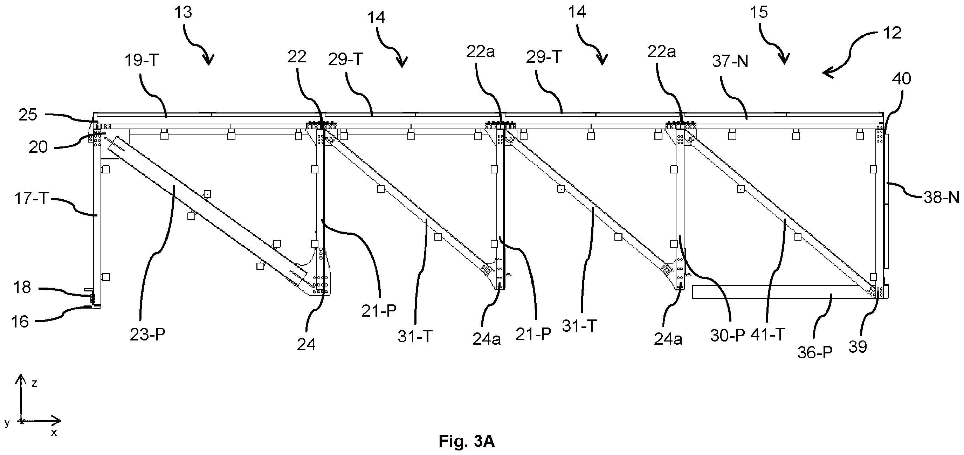

In assembled condition and in front view (see Fig. 3) the rotor-sided frame module (13) having a y-base profile (16) extending in y-direction, a rotor-sided vertical profile (17) extending in z-direction, which is connected with the y-base profile (16) via a base-sided corner connection point (18). Further a roof-sided horizontal profile (19) extending in x-direction, which one end is connected with the rotor-sided vertical profile (17) via a roof-sided corner connection point (20). Further a vertical profile (21) extending in z-direction, which one end is connected with the opposite end of the roof-sided horizontal profile (19) via a roof-sided connection point (22). And a diagonal profile (23), which one end is connected to the roof-sided corner connection point (20) and the other end is connected to another end of the vertical profile (21) via a base-sided connection point (24). A further component of the rotor-sided frame module (13) is a y-roof profile (25) extending in y-direction and which is connected with the rotor-sided vertical profiles (17) via the roof-sided corner connection points (20).

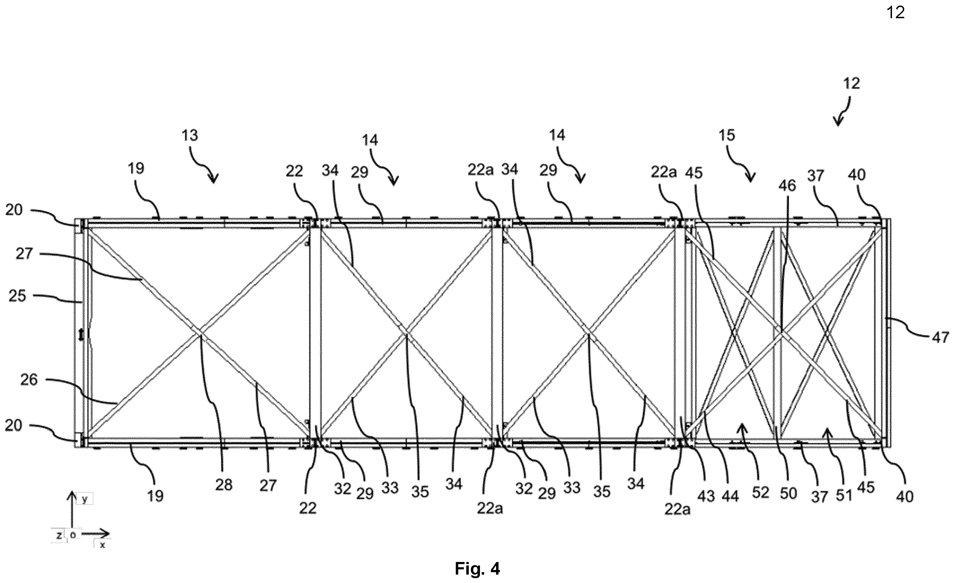

As can be seen in Fig. 4, at the roof-side of the rotor-sided frame module (13) are arranged two diagonal roof profiles (26, 27), wherein the first diagonal roof profile (26) is a continuous profile and which extends from the left hand front roof-sided corner connection point (20) to the right hand rear roof-sided connection point (22). And wherein the second diagonal roof profile (27) is a two-part profile extending from the left hand rear roof-sided corner connection point (20) to the right hand front roof-sided connection point and at the intersection of the two diagonal profiles (26, 27) are a roof bridging plate (28) arranged for connection the first part of the diagonal roof profile (27) with the second part of the diagonal roof profile (27). Under the roof bridging plate (28) a passage is provided through which the first diagonal roof profile (26) runs. In a not shown embodiment the diagonal roof profiles (26, 27) could be arranged vice versa.

In assembled condition and in front view (see Fig. 3) each of the two intermediate frame modules (14) having a roof-sided horizontal profile (29) extending in x-direction, which is connected via the roof-sided connection point (22) with the rotor-sided frame module (13) respectively with the foregoing intermediate frame module (14) neighbored in x-direction. In other words, the first intermediate frame module (14) is connected to the rotor-sided frame module (13) neighboring in x-direction and the second intermediate frame module (14) is connected with the first intermediate frame module (14) neighboring in x-direction. Further there is provided a vertical profile (30) extending in z-direction, which is arranged between the end sides of the roof-sided horizontal profile (29) via a roof-sided connection point (22a) and a base-sided connection point (24a). Also there is provided a diagonal profile (31), which is connected with the roof-sided connection point (22) and the base-sided connection point (24a). The roof of each intermediate frame module (14) is equivalent constructed as the roof of the rotor-sided frame module (13). So a y-roof profile (32) extending in y-direction and which is connected with the vertical profiles (21) via the roof-sided connection points (22).

As can be seen in Fig. 4, at the roof-side of each intermediate frame module (14) are arranged two diagonal roof profiles (33, 34), wherein the first diagonal roof profile (33) is a continuous profile and which extends from the left hand front roof-sided connection point (22) to the right hand rear roof-sided connection point (22a). And wherein the second diagonal roof profile (34) is a two-part profile extending from the left hand rear roof-sided connection point (22) to the right hand front roof-sided connection point (22a). At the intersection of the two diagonal profiles (33, 34) are a roof bridging plate (35) arranged for connection the first part of the diagonal roof profile (34) with the second part of the diagonal roof profile (34). Under the roof bridging plate (35) a passage is provided through which the first diagonal roof profile (33) runs. In a not shown embodiment the diagonal roof profiles (33, 34) could be arranged vice versa.

In assembled condition and in front view (see Fig. 3) the end-sided frame module (15) having a x-base profile (36) extending in x-direction, which is connected with the intermediate frame module (14), especially with the second intermediate frame module (14), neighbored in x-direction via the base-sided connection point (24a). A fixed connection is provided when the frame modules (14, 15) are connected to the girder frame (not shown). This will be described in detail later. Further the end-sided frame module (15) provides a roof-sided horizontal profile (37) extending in x-direction, which is connected with the intermediate frame module (14) via a roof-sided connection point (22a); and a vertical end profile (38) extending in z-direction, which is arranged between the end-sides of the x-base profile (36) via a base-sided corner connection point (39) and the roof-sided horizontal profile (37) via a roof-sided corner connection point (40). Further a diagonal profile (41) is provided, which one end is connected to the roof-sided connection point (22a) and the other end is connected with a base-sided corner connection point (39). The x-base profile is part of a base frame (42) of the end-sided frame module (15) which will be described in detail below. The roof of the end-sided frame module (15) is equivalent constructed as the roof of the rotor-sided frame module (13). So a y-roof profile (43) extending in y-direction and which is connected with the vertical profiles (30) via the roof-sided connection points (22a).

As can be seen in Fig. 4, at the roof-side of the end-sided frame module (15) are arranged two diagonal roof profiles (44, 45), wherein the first diagonal roof profile (44) is a continuous profile and which extends from the left hand front roof-sided connection point (22a) to the right hand rear roof-sided corner connection point (40). And wherein the second diagonal roof profile (45) is a two-part profile extending from the left hand rear roof-sided connection point (22a) to the right hand front roof-sided corner connection point (40). At the intersection of the two diagonal profiles (44, 45) are a roof bridging plate (46) arranged for connection the first part of the diagonal roof profile (45) with the second part of the diagonal roof profile (45). Under the roof bridging plate (46) a passage is provided through which the first diagonal roof profile (44) runs. In a not shown embodiment the diagonal roof profiles (44, 45) could be arranged vice versa. Additional to this the end-sided frame module (15) comprises a further y-roof end profile (47) extending in y-direction between the vertical end profiles (38). Latter are connected with the y-roof end profile (47) via the roof-sided corner connection points (40).

Let's now come to the base frame (42) of the end sided frame module (15) as can best seen in Figs. 2 and 4. The base frame (42) comprises a y-base profile (48) extending in y-direction between the vertical profiles (30). Latter are connected with the y-base profile (48) via the base-sided connection points (24a). Additional to that there is further y-base end profile (48) extending in y-direction between the vertical end profiles (38), which are connected via the base-sided corner connection points (39). In the middle between the y-base profile (48) and the y-base end profile (49) are arranged a middle y-base profile (50) extending in y-direction. The middle y-base profile (50) is mounted to the x-base profiles (36). Between the y-base profile (48) and the middle y-base profile (50) as well as between the middle y-base profile (50) and the y-base end profile (49) are arranged a pair of crossed diagonal base profiles (51, 52). Latter are mounted with the aforesaid profiles (48, 49, 50).

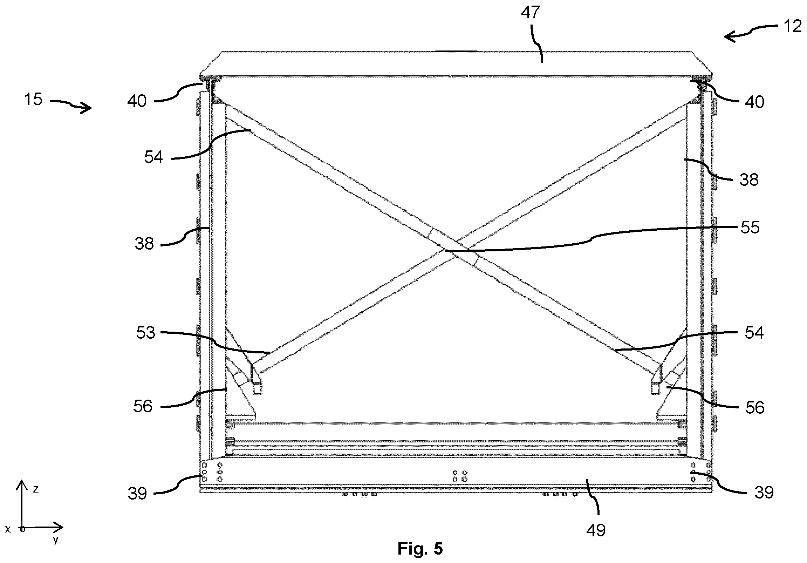

As can be best seen in Figs. 2 and 5 the end-sided frame module (15) further comprises diagonal side profiles (53, 54) at the end side of the end-sided frame module (15). This arrangement is equivalent to the aforesaid roof diagonals. However, the current first diagonal side profile (53) is a continuous profile and is mounted to t the lower end of the vertical end profile (38) of the front side and to the upper end of the vertical end profile (38) of the rear side. The second diagonal side profile (54) is a two parted profile mounted to the upper end of the vertical end profile (38) of the front side and to the lower end of the vertical end profile (38) of the rear side. At the intersection of the two diagonal side profiles (53, 54) is a side bridging plate (55) arranged for connection the first part of the diagonal side profile (54) with the second part of the diagonal side profile (54). Under the side bridging plate (55) a passage is provided through which the first diagonal side profile (53) runs. In a not shown embodiment the diagonal side profiles (53, 54) could be arranged vice versa. In Fig. 5 further can be seen cover plates which are mounted to the modular nacelle frame structure 12. This will be described in detail below.

First back to Fig. 3A which depicts a front-view of the modular nacelle frame structure (12) according to Fig. 2. In the Cartesian xyz coordinate system of Fig. 3 the y-axis is perpendicular to the drawing plane and runs into it. The x-axis runs to the right in Fig. 3A and the z-axis runs upwards in Fig. 3A. In the following with Fig. 3A the acting forces on the modular nacelle frame structure (12) will be described. Because the acting forces depends on the direction it should be defined that in the present condition all inner components of the nacelle are mounted and without that a wind force applies to the nacelle. In other words, a force is only applied to the modular nacelle frame structure downwards the z-axis. For a better understanding, the aforesaid profiles getting an additional letter corresponding to the acting force. Thus, a profile on which a pressure force acting gets a "P" for a pressure rod, a profile on which a tensile force acting gets a "T" for a tension rod and a profile on which a no force acting gets a "N" for neutral rod.

The modular nacelle frame structure (12) is the same as described in Fig. 2 and can be seen Fig. 3. The rotor sided frame module (13) having a y-base profile (16) extending in y-direction, a rotor-sided vertical tension profile (17-T), which function as tension rod and which is connected with the y-base profile (16) via a base-sided corner connection point (18), a roof-sided horizontal tension profile (19-T), which function as tension rod and which one end is connected with the rotor-sided vertical tension profile (17-T) via a roof-sided corner connection point (20), a vertical pressure profile (21-P), which function as pressure rod and which one end is connected with the a opposite end of the horizontal tension profile (19-T) via a roof-sided connection point (22) and a diagonal pressure profile (23-P), which function as pressure rod and which one end is connected to the roof-sided corner connection point (20) and the other end is connected to another end of the vertical pressure profile (21-P) via a base-sided connection point (24).

One of the intermediate frame module (14) having a roof-sided horizontal tension profile (29-T), which function as tension rod and which is connected via the roof-sided connection point (22a) with the rotor-sided frame module (13), a vertical pressure profile (21-P), which function as pressure rod and which is arranged between the end sides of the roof-sided horizontal tension profile (29-T) via a roof-sided connection point (22a) and a base-sided connection point (24a) and a diagonal tension profile (31-T), which function as tension rod and which is connected with the roof-sided connection point (22) and the base-sided connection point (24a). The other intermediate frame module has essentially the same structure. However this module is connected with the foregoing intermediate frame module (24) via the roof-sided connection point (22a) in x-direction.

The end-sided frame module (15) having a base pressure profile (36-P), which function as pressure rod and which is connected with the intermediate frame module (14) via the base-sided connection point (24a), a horizontal neutral profile (37-N), which function as neutral rod and which is connected with the intermediate frame module (14) via a roof-sided connection point (22a), a vertical neutral end profile (38-N), which function as neutral rod and which is arranged between the end-sides of the base pressure profile (36-P) via a base-sided corner connection point (39) and the horizontal neutral profile (37-N) via a roof-sided corner connection point (40) and a diagonal tension profile (41-T), which function as tension rod and which one end is connected to the roof-sided connection point (22a) and the other end is a base-sided corner connection point (39).

In the shown embodiment of Fig. 3 the main frame and the girder frame of the wind turbine are not shown, but assembled condition the main frame is mounted inside the rotor-sided frame module (13) and the girder frame is mounted inside at least one intermediate frame module (14). In this condition, it should be pointed out that these components will be acting as pressure rods to compensate acting pressure force.

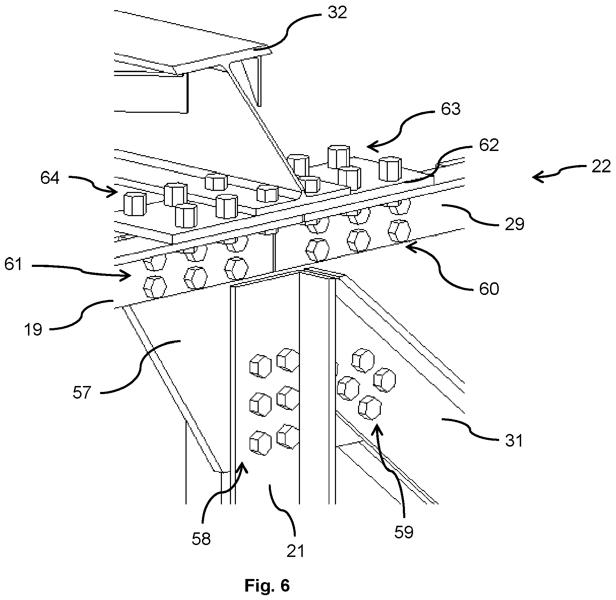

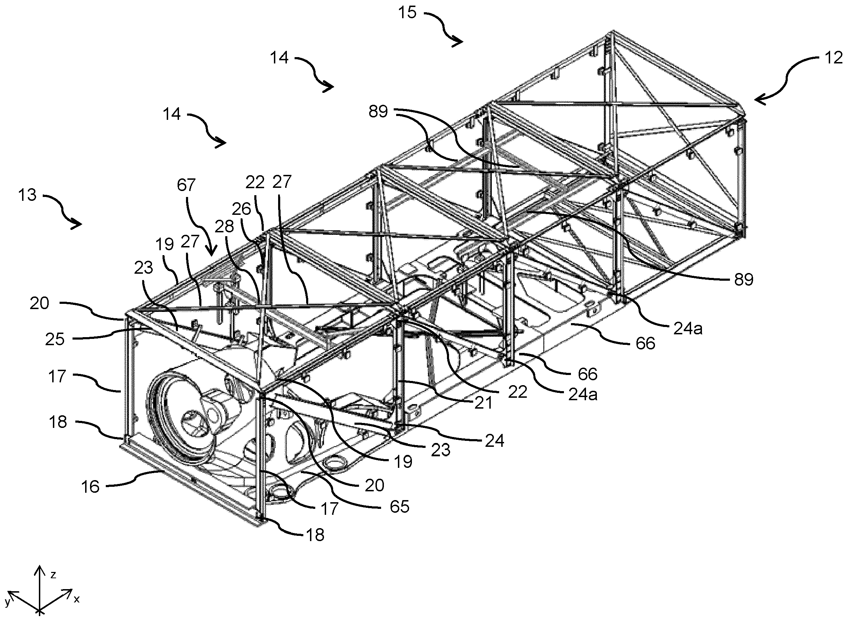

Fig. 6 depicts a detailed view of a roof-sided connection point (22, 22a) of the modular nacelle frame structure (12) according to Fig. 2. One example will be explained with the roof-sided connection point (22). However the same applies to the other roof-connection points (22a) in the same way. At the roof-sided connection point (22) several profiles are connected via a plurality of bolts, namely the y-roof profile (32) of the intermediate frame module (14), a roof-sided horizontal profile (29) of the intermediate frame module (14), the roof-sided horizontal profile (19) of the rotor-sided frame module (13), a diagonal profile (31) of the intermediate frame module (14) and the vertical profile (21) of the rotor-sided frame module (13). Therefore the roof-sided connection point (22) having a trapezoidal plate (57). At the middle area of the trapezoidal plate (57) one end are of the vertical profile (21) of the rotor-sided frame module (13) is mounted via a first plurality of bolts (58). At the right hand of the trapezoidal plate (57) on end of the diagonal profile (31) of the intermediate frame module (14) is mounted via a second plurality of bolts (59). At the top are of the trapezoidal plate (57) one end of the a roof-sided horizontal profile (29) of the intermediate frame module (14) is mounted via a third plurality of bolts (60) and one end of roof-sided horizontal profile (19) of the rotor-sided frame module (13) is mounted via a fourth plurality of bolts (61). On top of the roof-sided horizontal profile (29) of the intermediate frame module (14) and the roof-sided horizontal profile (19) of the rotor-sided frame module (13) a mounting plate (62) is arranged, wherein on the mounting plate (62) the y-roof profile (32) of the intermediate frame module (14) is arranged. Latter profile is mounted to the mounting plate (62) via a pair of fifth and sixth plurality of bolts (63, 64). At the same time with the fifth and sixth plurality of bolts (63, 64) the mounting plate (62) is mounted to the roof-sided horizontal profile (29) of the intermediate frame module (14) and the roof-sided horizontal profile (19) of the rotor-sided frame module (13).

In a not shown detailed embodiment of the modular nacelle frame structure (12), the base-sided connection point (24, 24a) having a V-shaped design. At a middle area and at a left hand-sided area a plurality of bores are arranged for connecting a profile, namely the diagonal profiles (23, 31) and vertical profiles (21, 30).

In a not shown detailed embodiment of the modular nacelle frame structure (12), the base-sided corner connection point (39) having a V-shaped design, wherein at a middle area and at a left hand-sided area a plurality of bores are arranged for connecting a profile, namely the diagonal profile (41) and the vertical end profile (38).

In a not shown detailed embodiment of the modular nacelle frame structure (12), the roof-sided corner connection point (20) of the rotor-sided frame module (13) having is shaped like an angle, in particular rectangular, wherein at a vertical area and at a horizontal area are a plurality of bores are arranged for connecting a profile. This means that at the vertical area of the roof-sided corner connection point (20) the rotor-sided vertical profile (17) is mounted via a plurality of bolts. Further this means that at the horizontal area the roof-sided horizontal profile (19) is mounted via a plurality of bolts. Also the diagonal profile (23) is mounted to the roof-sided corner connection point (20) via a plurality bolts.

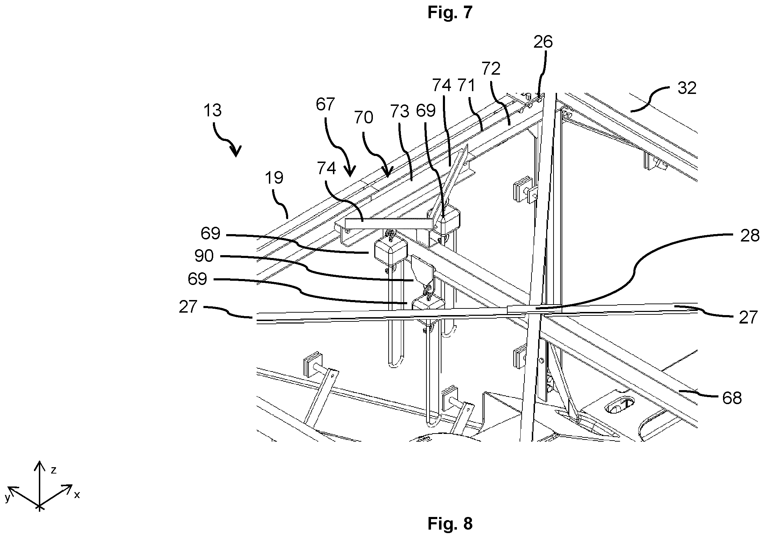

Fig. 7 depicts a perspective view of the modular nacelle frame structure (12) according to Fig. 2 with an assembled main frame (65) and crane (67). In the Cartesian xyz coordinate system of Fig. 7 the y-axis is 45° angled to the drawing plane and runs into it. The x-axis is rectangular to the y-axis and runs into the drawing plane. The z-axis runs upwards in Fig. 7.

The main frame (65) is mounted inside the rotor-sided frame module (13). This is achieved in that the frame module is once mounted to the y-base profile (16) and twice to the base-side connection point (24). Inside the two intermediate frame profiles (14) are arranged the girder frame (66). Latter is mounted once to the main frame (65) and twice to the base-sided connection points (24, 24a).

In case a force is only applied to the modular nacelle frame structure (12) downwards the z-axis, the main frame (65) and the girder frame (66) acting as pressure rods.

Further inside the rotor-sided frame module (13) a crane (67) for lifting heavy components of a wind turbine (1) is provided. The crane (67) will be described in detail with Fig. 8. Additional at the intermediate frame module 14 are arranged support profiles (89) for supporting crane trolleys (not shown) for bypassing the generator (not shown).

Fig. 8 depicts a detailed section view of the crane (67) according to Fig. 7. In the Cartesian xyz coordinate system of Fig. 8 the y-axis is 45° angled to the drawing plane and runs into it. The x-axis is rectangular to the y-axis and runs into the drawing plane. The z-axis runs upwards in Fig. 8.

Before describing the crane (67) in detail attention should be paid to the intersection of the roof diagonals (26, 27). Under the roof bridging plate (28) is a passage through which the continuous roof diagonal runs. The two parted roof diagonal (27) are connected via the roof bridging plate (28).

In the following the crane (67) should be described in detail. The crane comprises a crossbeam (68) extending in y-direction between the roof-sided horizontal profiles (19) of the rotor-sided frame module (13). At the crossbeam (68) three crane hoists (69) are mounted to disassemble the component of a wind turbine (1) and bring them into a horizontal transport position. For example one crane hoists (69) is arranged at one crane trolley (90), which is arranged at the crossbeam (68). On each end of the crossbeam (68) a bearing arrangement (70) is provided. This bearing arrangement (70) runs into C-profiles (71) which are arranged in z-direction under the roof-sided horizontal profiles (19, 29) and extending in x-direction over the length of the roof-sided horizontal profiles (19) of the rotor-sided frame module (13) and the roof-sided horizontal profiles (29) of the intermediate frame module profile (14), see Fig. 7. In result the C-profiles (71) form crane rails. In an alternative embodiment the C-profile could be a L-profile. Because of the bearing arrangement 70 the crane (67) is able to work in the area of the rotor-sided frame module (13) and the two intermediate profiles (14). Or in other words the crane (67) is able to work in the area of the main frame (65) and the girder frame (66). The C-profiles (71) having an inner tread (72) to seat the bearing arrangement (70). Therefore the bearing arrangement comprises a crossbeam carrier (73) for running in the inner tread (72) of the C-profile (71). In particular the crossbeam carrier (73) is designed as a Z-profile shape. The crossbeam carrier (73) is mounted to the crossbeam (68) via a pair of cross braces (74).

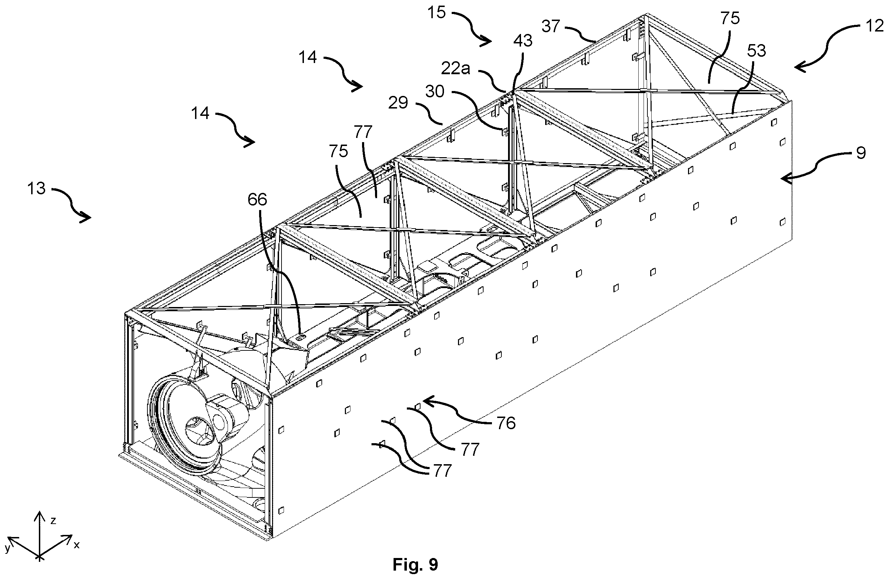

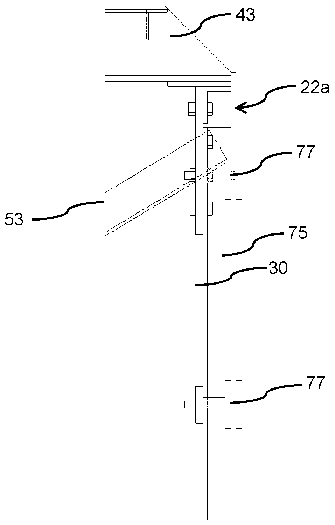

Fig. 9 depicts a perspective view of the modular nacelle frame structure (12) according to Fig. 2 with the main frame (65) and the girder frame (66) as well as the partly assembled nacelle cover (9). In the Cartesian xyz coordinate system of Fig. 9 the y-axis is 45° angled to the drawing plane and runs into it. The x-axis is rectangular to the y-axis and runs into the drawing plane. The z-axis runs upwards in Fig. 9.

The nacelle cover (9) for covering a nacelle frame structure (12) of a wind turbine (1) comprises a plurality of cover plates (75), wherein each of the cover plate (75) is directly mounted to the modular nacelle frame structure (12) via a holder system (76). In the shown embodiment, each cover plate (75) extends over the whole front, rear and side of the nacelle frame structure (12). However, it is also possible that there are more cover plates (75) for example in size of a frame module (13, 14, 15). Further it should be pointed out that one or more cover plates (75) can also cover the roof of the nacelle frame structure (12). Each cover plate (75) itself consists of a composite compound. Each cover plate (75) itself can consist of a single or composite material e.g. fibre-reinforced plastic (FRP).

The holder system (76) comprises a plurality of cover connections (77), which are distribute arranged over the modular frame structure (12), wherein the cover connections (77) are flexible for compensating stress due to tolerances and deformation due to external forces between the modular nacelle frame structure (12) and nacelle cover (9). The cover connections (77) are distributed arranged at the roof-sided horizontal profiles (19, 29, 37), the vertical profiles (17, 21, 30, 39), and diagonal profiles (23, 31, 41) of each frame module (13, 14, 15).

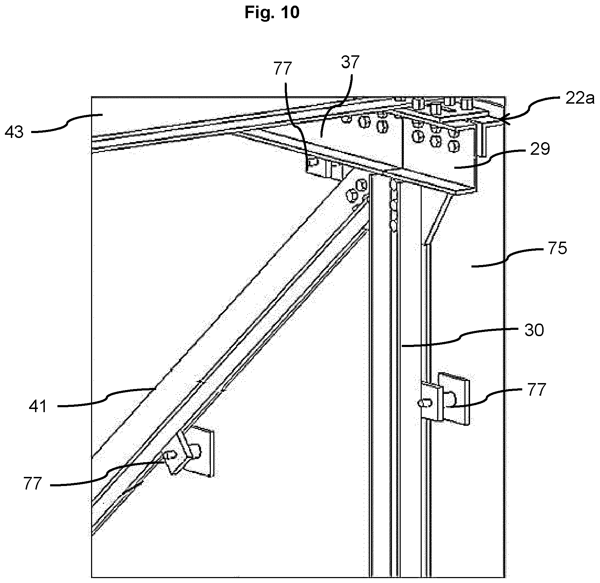

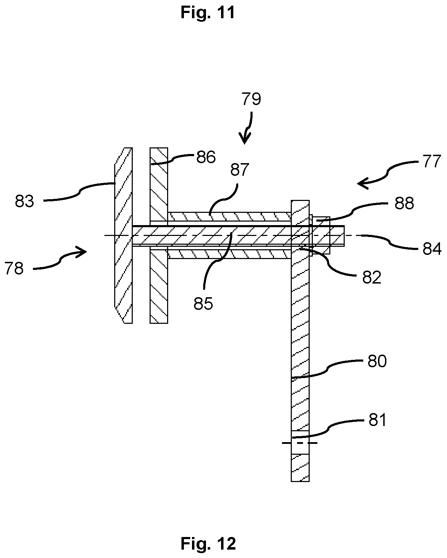

The cover connections (77) and the arrangement are shown in Figs. 10 to 13, wherein Fig. 10 depicts a detailed section side-view of end-sided frame module (15); Fig. 11 depicts a detailed section rear-view of t of end-sided frame module (15) according to Fig. 11 and Fig. 12 depicts a sectional view of the cover connection (77).

The Figures 10 and 11 shows y-roof profile (43) of the end-sided frame module (15) connected with the roof-sided horizontal profile (29) of the intermediate profile (14) and roof-sided horizontal profile (37) of the end-sided frame module (15) as well as the vertical profile (30) of the end-sided frame module (15) via the roof-sided connection point (22a). In particular Fig. 10 shows the first diagonal side profile (53) of the end-sided frame module (15) and Fig. 11 shows the diagonal profile (41) of the end-sided frame module (15). At the roof-sided horizontal profile (37), the diagonal profile (41) and the vertical profile (30) of the end-sided frame module (15) are arranged the cover connections (77) for holding the cover plate (75). The cover connections (77) are mounted to the profiles via bolts (not shown). According to Fig. 12 the fixing plate (80) of the cover connection (77) is also placed in a structural supporting manner. It simultaneously serves as filler plate between two parallel orientated profiles, e.g. diagonal profile (41) and diagonal profile (31).

The cover connection (77) comprises a presser part (78), a presser counterpart (79) and fixing plate (80) for mounting the cover connection (77) to one of the foresaid profiles. Therefore the fixing plate (80) has a first bore (81). Opposite to the first bore (81), the fixing plate (80) has a second bore (82). The presser part (78) comprises a presser plate (83) and along to the middle axis (84) of the presser plate (83) extends a threaded rod (85). Coaxial to the presser part (78) is arranged the presser counterpart (79). Latter comprises a presser counter plate (86) and a shaft (87), which extends along the middle axis (84). The presser part (78), presser counterpart (79) and the second bore (82) of the fixing plate (80) are arranged coaxial to the middle axis (84) in that way that the threaded rod (85) runs through the shaft (87) and the second bore (82). The threaded rod is fixed to the fixing plate (80) via a screw (88). The shaft (87) hits the fixing plate (80). In assembled condition the cover plate (75) is fixed between the presser plate (83) and the counter presser plate (86). To compensate an uneven surface of cover plate (75) and reduce selective stress, the pressure surfaces of presser plate (83) and counter plate (86) can be covered by soft material, for instance a rubber coating (not shown in Fig. 12).

### LIST OF REFERENCE SIGNS

- 1: wind turbine
- 2: tower
- 3: nacelle
- 4: drive train chain
- 5: rotor
- 6: rotor blades
- 7: hub
- 9: nacelle cover
- 11: spinner
- 12: modular nacelle frame structure
- 13: rotor-sided frame module
- 14: intermediate frame module
- 15: end-sided frame module
- 16: y-base profile
- 17: rotor-sided vertical profile
- 17-T: rotor-sided vertical tension profile
- 18: base-sided corner connection point
- 19: roof-sided horizontal profile
- 19-T: roof-sided horizontal tension profile
- 20: roof-sided corner connection point
- 21: vertical profile
- 21-P: vertical pressure profile
- 22: roof-sided connection point
- 22a: roof-sided connection point
- 23: diagonal profile
- 23-P: diagonal pressure profile
- 24: base-sided connection point
- 24a: base-sided connection point
- 25: y-roof profile
- 26: first diagonal roof profile
- 27: second diagonal roof profile
- 28: roof bridging plate
- 29: a roof-sided horizontal profile
- 29-T: a roof-sided horizontal tension profile
- 30: vertical profile
- 30-P: vertical pressure profile
- 31: diagonal profile
- 31-T: diagonal tension profile
- 32: y-roof profile
- 33: first diagonal roof profile
- 34: second diagonal roof profile
- 35: roof bridging plate
- 36: x-base profile
- 36-P: x-base pressure profile
- 37: roof-sided horizontal profile
- 37-N: roof-sided horizontal neutral profile
- 38: vertical end profile
- 38-N: vertical end neutral profile
- 39: base-sided corner connection point
- 40: roof-sided corner connection point
- 41: diagonal profile
- 41-T: diagonal tension profile
- 42: base frame
- 43: y-roof profile
- 44: first diagonal roof profile
- 45: second diagonal roof profile
- 46: roof bridging plate
- 47: y-roof end profile
- 48: y-base profile
- 49: y-base end profile
- 50: middle y-base profile
- 51: crossed diagonal base profiles
- 52: crossed diagonal base profiles
- 53: first diagonal side profile
- 54: second diagonal side profile
- 55: side bridging plate
- 56: connection point of the end side profile
- 57: trapezoidal plate
- 58: first plurality of bolts
- 59: second plurality of bolts
- 60: third plurality of bolts
- 61: fourth plurality of bolts
- 62: mounting plate
- 63: fifth plurality of bolts
- 64: sixth plurality of bolts
- 65: main frame
- 66: girder frame
- 67: crane
- 68: crossbeam
- 69: crane hoists
- 70: bearing arrangement
- 71: C-profile
- 72: inner tread
- 73: crossbeam carrier
- 74: cross braces
- 75: cover plate
- 76: holder system
- 77: cover connection
- 78: presser part
- 79: presser counterpart
- 80: fixing plate
- 81: first bore
- 82: second bore
- 83: presser plate
- 84: middle axis
- 85: threaded rod
- 86: presser counter plate
- 87: shaft
- 88: screw
- 89: support profile

## Claims

1. A modular nacelle frame structure (12) for a nacelle (3) of a wind turbine (1) comprising a plurality of frame modules (13, 14, 15) having an equal constructed front and a rear side , the plurality of frame modules comprising:
- a rotor-sided frame module (13);
- at least one intermediate frame module (14), wherein one intermediate frame module (14) is connected with the rotor-sided frame module (13) and
- an end-sided frame module (15), which is connected to one of the intermediate frame module (14); and
wherein in assembled condition and in front view
- the rotor sided frame module (13) having
-- a y-base profile (16) extending in y-direction,
-- a rotor-sided vertical profile (17), which is connected with the y-base profile (16) via a base-sided corner connection point (18),
-- a roof-sided horizontal profile (19) extending in x-direction, which one end is connected with the rotor-sided vertical profile (17) via a roof-sided corner connection point (20),
-- a vertical profile (21) extending in z-direction, which one end is connected with the opposite end of the roof-sided horizontal profile (19) via a roof-sided connection point (22) and
-- a diagonal profile (23), which one end is connected to the roof-sided corner connection point (20) and the other end is connected to another end of the vertical profile (21) via a base-sided connection point (24) and
-- a y-roof profile (25) extending in y-direction and which is connected with the rotor-sided vertical profile pr(17) via the roof-sided corner connection point (20);
- one of the intermediate frame module (14) having
-- a roof-sided horizontal profile (29) extending in x-direction, which is connected via the roof-sided connection point (22) with the rotor-sided frame module (13),
-- a vertical profile (30) extending in z-direction which is arranged between the end sides of the roof-sided horizontal profile (29) via a roof-sided connection point (22a) and a base-sided connection point (24a), and
-- a diagonal profile (31), which is connected with the roof-sided connection point (22) and the base-sided connection point (24a)
-- a y-roof profile (32) extending in y-direction and which is connected with the vertical profile (21) via the roof-sided connection point (22);
- the end-sided frame module (15) having
-- a x-base profile (36) extending in x-direction, which is connected with the intermediate frame module (14) via the base-sided connection point (24a),
-- a roof-sided horizontal profile (37) extending in x-direction, which is connected with the intermediate frame module (14) via the roof-sided connection point (22a),
-- a vertical end profile (38) extending in z-direction, which is arranged between the end-sides of the x-base profile (36) via a base-sided corner connection point (39) and the roof-sided horizontal profile (37) via a roof-sided corner connection point (40) and
-- a diagonal profile (41), which one end is connected to the roof-sided connection point (22a) and the other end is the base-sided corner connection point (39)
-- y-roof profile (43) extending in y-direction and which is connected with the vertical profile (30) via the roof-sided connection point (22a).

2. The modular nacelle frame structure as claimed in claim 1, wherein in assembled condition and in front view
- the rotor sided frame module (13) having
-- as the rotor-sided vertical profile (17) a rotor-sided vertical tension profile (17-T),
-- as the roof-sided horizontal profile (19) a roof-sided horizontal tension profile (19-T),
-- as the vertical profile (21) a vertical pressure profile (21-P),
-- as the diagonal profile (23) a diagonal pressure profile (23-P);
- the one of the intermediate frame module having
-- as the roof-sided horizontal profile (29) a roof-sided horizontal tension profile (29-T),
-- as the vertical profile (30) a vertical pressure profile (30-P),
-- as the diagonal profile (31) a diagonal tension profile (31-T);
- the end-sided frame module (15) having
-- as the x-base profile (36) a x-base pressure profile (36-P),
-- as the roof-sided horizontal profile (37) a roof-sided horizontal neutral profile (37-N),
-- as the vertical end profile (38) a vertical neutral end profile (38-N),
-- as the diagonal profile (41) a diagonal tension profile (41-T).

3. The modular nacelle frame structure as claimed in claim 1 or 2, **wherein** the roof-sided connection point (22, 22a) having a trapezoidal design, wherein at a middle area and at a right hand a side are plurality of bores arranged for connecting a profile.

4. The modular nacelle frame structure as claimed in one of the claims 1 to 3, **wherein** the base-sided connection point (24, 24a) having a V-shaped design, wherein at a middle area and at a left hand-sided area are a plurality of bores are arranged for connecting a profile.

5. The modular nacelle frame structure as claimed in one of the claims 1 to 4, **wherein** the base-sided corner connection point (39) having a V-shaped design, wherein at a middle area and at a left hand-sided area are a plurality of bores are arranged for connecting a profile.

6. The modular nacelle frame structure as claimed in one of the claims 1 to 5, **wherein** the roof-sided corner connection point (20) having a angularly shaped design, in particular rectangular, wherein at a vertical area and at a horizontal area are a plurality of bores are arranged for connecting a profile.

7. The modular nacelle frame structure as claimed in one of the claims 1 to 6, **wherein** at the roof-side of each frame module (13, 14, 15) has a y-roof profile extending in y direction for connecting the horizontal roof-sided profiles (19, 29, 37) of each frame module (13, 14, 15) and between the y-roof profiles diagonal roof profiles (26, 27, 33, 34, 44, 45) are arranged.

8. The modular nacelle frame structure as claimed in one of the claims 1 to 7, **wherein** a base frame (42) of the end-sided module (15) comprises a two x-base profiles (36), in particular pressure profiles, at least two y-base profiles (49, 50) extending in y direction, wherein one y-base profile (50) is arranged in the middle area of the end-sided frame module (15) and the y-base end profile (49) is arranged at the end portion of the end frame module (15), and crossed diagonal profiles (51), wherein these are arranged between the y-base end profile (49) and the y-base profile (50).

9. The modular nacelle frame structure as claimed in one of the claims 1 to 8, **wherein** each of the connection points as well as corner connection points provides bolted connections.

10. The modular nacelle frame structure as claimed in one of the claims 1 to 9, **wherein** a crane (67) for lifting heavy components of a wind turbine (1) is arranged within the nacelle frame structure (12), therefore C-profiles (71) are arranged at the roof sided horizontal profiles (19, 29), wherein the C-profiles (71) having an inner tread (72).

11. The modular nacelle frame structure as claimed in claim 10, wherein a crossbeam (68) is arranged between the C-profiles (71) and wherein at the crossbeam (68) at least one crane hoist (69) can be mounted to disassemble the component of a wind turbine and bring them into a horizontal transport position.

12. The modular nacelle frame structure as claimed in one of the claims 10 to 11, **wherein** for reducing the nacelle height, sidewise of the crossbeam (68) are arranged rails for at least one trolley and at least one crane hoist (69).

13. A nacelle cover for covering a nacelle frame structure of a wind turbine comprises a plurality of cover plates (75), wherein each of the cover plate (75) is directly mounted to the modular nacelle frame structure (12) as claimed in claim 1 via a holder system (76).

14. The nacelle cover as claimed in claim 13, **wherein** the holder system (76) comprises a plurality of cover connections (77), which are distribute arranged over the modular frame structure (12), wherein the cover connections (77) are flexible for compensating stress due to tolerances between the modular nacelle frame structure (12) and nacelle cover (9).

15. A nacelle of a wind turbine comprises a main frame, a girder frame and modular nacelle frame structure as claimed in one of the claims 1 to 12, wherein the main frame (65) is arranged inside the rotor-sided frame module (13) and the girder frame (66) is arranged inside at least one intermediate frame module (14) and a nacelle cover (9) as claimed in claims 13 or 14.

16. A wind turbine having a nacelle (3) as claimed in claim 15.

17. A method for producing electrical power **characterized by** providing a wind turbine as claimed in claim 16.

## Patentansprüche

1. Eine modulare Gondelrahmenstruktur (12) für eine Gondel (3) einer Windenergieanlage (1) eine Vielzahl von Rahmenmodulen (13, 14, 15) mit einer gleich aufgebauten Vorder- und Rückseite umfassend, wobei die Mehrzahl der Rahmenmodule folgendes umfasst:
- ein rotorseitiges Rahmenmodul (13);
- mindestens ein Zwischenrahmenmodul (14), wobei ein Zwischenrahmenmodul (14) mit dem rotorseitigen Rahmenmodul (13) verbunden ist und
- ein endseitiges Rahmenmodul (15), das mit einem der Zwischenrahmenmodule (14) verbunden ist; und
wobei im zusammengebauten Zustand und in der Vorderansicht
- das rotorseitige Rahmenmodul (13) folgendes aufweist:
-- ein sich in y-Richtung erstreckendes Y-Basisprofil (16),
-- ein rotorseitiges Vertikalprofil (17), das über eine fußseitige Eckverbindungsstelle (18) mit dem Y-Basisprofil (16) verbunden ist,
-- ein sich in x-Richtung erstreckendes dachseitiges Horizontalprofil (19), dessen eines Ende über eine dachseitige Eckverbindungsstelle (20) mit dem rotorseitigen Vertikalprofil (17) verbunden ist,
-- ein in z-Richtung verlaufendes Vertikalprofil (21), dessen eines Ende über eine dachseitige Verbindungsstelle (22) mit dem gegenüberliegenden Ende des dachseitigen Horizontalprofils (19) verbunden ist und
-- ein Diagonalprofil (23), dessen eines Ende mit der dachseitigen Eckverbindungsstelle (20) und dessen anderes Ende über eine basisseitige Verbindungsstelle (24) mit dem anderen Ende des Vertikalprofils (21) verbunden ist und
-- ein Y-Dachprofil (25), das sich in y-Richtung erstreckt und über die dachseitige Eckverbindungsstelle (20) mit dem Rotorseiten-Vertikalprofil (17) verbunden ist;
- eines der Zwischenrahmenmodule (14) folgendes aufweist:
-- ein sich in x-Richtung erstreckendes dachseitiges Horizontalprofil (29), das über die dachseitige Verbindungsstelle (22) mit dem rotorseitigen Rahmenmodul (13) verbunden ist,
-- ein in z-Richtung verlaufendes Vertikalprofil (30), das über eine dachseitige Verbindungsstelle (22a) und eine basisseitige Verbindungsstelle (24a) zwischen den Stirnseiten des dachseitigen Horizontalprofils (29) angeordnet ist und
-- ein Diagonalprofil (31), das mit der dachseitigen Anschlussstelle (22) und der basisseitigen Anschlussstelle (24a) verbunden ist
-- ein Y-Dachprofil (32), das sich in y-Richtung erstreckt und über die dachseitige Verbindungsstelle (22) mit dem Vertikalprofil (21) verbunden ist;
- das endseitige Rahmenmodul (15) folgendes aufweist:
-- ein in x-Richtung verlaufendes x-Basisprofil (36), das über die basisseitige Verbindungsstelle (24a) mit dem Zwischenrahmenmodul (14) verbunden ist,
-- ein dachseitiges Horizontalprofil (37), das sich in x-Richtung erstreckt und über einen dachseitigen Verbindungspunkt (22a) mit dem Zwischenrahmenmodul (14) verbunden ist,
-- ein in z-Richtung verlaufendes vertikales Abschlussprofil (38), das über eine basisseitige Eckverbindungsstelle (39) zwischen den Stirnseiten des X-Basisprofils (36) und dem dachseitigen Horizontalprofil angeordnet ist (37) über eine dachseitige Eckverbindungsstelle (40) und
-- ein Diagonalprofil (41), dessen eines Ende mit der dachseitigen Verbindungsstelle (22a) und dessen anderes Ende mit der basisseitigen Eckverbindungsstelle (39) verbunden ist
-- ein sich in y-Richtung erstreckendes Y-Dachprofil (43), das über die dachseitige Verbindungsstelle (22a) mit dem Vertikalprofil (30) verbunden ist.

2. Modulare Gondelrahmenstruktur nach Anspruch 1, wobei im zusammengebauten Zustand und in der Vorderansicht
- das rotorseitige Rahmenmodul (13) folgendes aufweist:
-- wie das rotorseitige Vertikalprofil (17) ein rotorseitiges Vertikalzugprofil (17-T),
-- wie das dachseitige Horizontalprofil (19) ein dachseitiges Horizontalzugprofil (19-T),
-- wie das Vertikalprofil (21) ein Vertikaldruckprofil (21-P),
-- wie das Diagonalprofil (23) ein Diagonaldruckprofil (23-P);
- eines der Zwischenrahmenmodule folgendes aufweist:
-- wie das dachseitige Horizontalprofil (29) ein dachseitiges Horizontalzugprofil (29-T),
-- wie das Vertikalprofil (30) ein Vertikaldruckprofil (30-P),
-- wie das Diagonalprofil (31) ein Diagonalzugprofil (31-T);
- das endseitige Rahmenmodul (15) aufweist
-- wie das x-Basis-Profil (36) ein x-Basis-Druckprofil (36-P),
-- wie das dachseitige horizontale Profil (37) ein dachseitiges horizontales Neutralprofil (37-N),
-- wie das vertikale Endprofil (38) ein vertikales neutrales Endprofil (38-N),
-- wie das Diagonalprofil (41) ein Diagonalzugprofil (41-T).

3. Die modulare Gondelrahmenstruktur nach Anspruch 1 oder 2, **wobei** die dachseitige Verbindungsstelle (22, 22a) eine trapezförmige Bauform aufweist, wobei in einem Mittelbereich und an einer rechten Seite mehrere Bohrungen zum Anschluss eines Profils angeordnet sind.

4. Die modulare Gondelrahmenstruktur nach einem der Ansprüche 1 bis 3, **wobei** die basisseitigen Verbindungspunkte (24, 24a) V-förmig ausgebildet sind, wobei im mittleren Bereich und im linken Bereich mehrere Bohrungen zur Verbindung eines Profils angeordnet sind.

5. Die modulare Gondelrahmenstruktur nach einem der Ansprüche 1 bis 4, **wobei** die basisseitige Eckverbindungsstelle (39) V-förmig ausgebildet ist, wobei an einem mittleren Bereich und an einem linksseitigen Bereich mehrere Bohrungen zum Anschluss eines Profils angeordnet sind.

6. Die modulare Gondelrahmenstruktur nach einem der Ansprüche 1 bis 5, **wobei** die dachseitige Eckverbindungsstelle (20) eine winklige, insbesondere rechteckige Ausbildung aufweist, wobei an einem vertikalen Bereich und an einem horizontalen Bereich mehrere Bohrungen zum Anschluss eines Profils angeordnet sind.

7. Die modulare Gondelrahmenstruktur nach einem der Ansprüche 1 bis 6, **wobei** an der Dachseite jedes Rahmenmoduls (13, 14, 15) ein in y-Richtung verlaufendes Y-Dachprofil zur Verbindung der horizontalen Dachseitenprofile (19, 29, 37) jedes Rahmenmoduls (13, 14, 15) und zwischen den Y-Dachprofilen diagonale Dachprofile (26, 27, 33, 34, 44, 45) angeordnet sind.

8. Die modulare Gondelrahmenstruktur nach einem der Ansprüche 1 bis 7, **wobei** ein Grundrahmen (42) des stirnseitigen Moduls (15) folgendes umfasst: zwei x-Basisprofile (36), insbesondere Druckprofile, mindestens zwei in y-Richtung verlaufende y-Basisprofile (49, 50), wobei ein Y-Basisprofil (50) im mittleren Bereich des endseitigen Rahmenmoduls (15) angeordnet ist und das Y-Basis-Endprofil (49) im Endbereich des endseitigen Rahmenmoduls (15) angeordnet ist, und überkreuzte Diagonalprofile (51), wobei diese zwischen dem Y-Basis-Endprofil (49) und dem Y-Basis-Profil (50) angeordnet sind.

9. Die modulare Gondelrahmenstruktur nach einem der Ansprüche 1 bis 8, **wobei** jeder der Verbindungspunkte sowie die Eckverbindungspunkte über Schraubverbindungen verfügen.

10. Die modulare Gondelrahmenstruktur nach einem der Ansprüche 1 bis 9, **wobei** innerhalb der Gondelrahmenstruktur (12) ein Kran (67) zum Heben schwerer Komponenten einer Windenergieanlage (1) angeordnet ist, wozu an den dachseitigen Horizontalprofilen (19, 29) C-Profile (71) mit einer Innenlauffläche angeordnet sind.

11. Der modulare Gondelrahmenaufbau nach Anspruch 10, **wobei** zwischen den C-Profilen (71) ein Querträger (68) angeordnet ist und wobei am Querträger (68) mindestens ein Hebezeug (69) zur Demontage montierbar ist um eine Komponente einer Windkraftanlage auseinanderzubauen und in eine horizontale Transportposition zu bringen.

12. Die modulare Gondelrahmenstruktur nach einem der Ansprüche 10 bis 11, **wobei** zur Reduzierung der Gondelhöhe seitlich des Querträgers (68) Schienen für mindestens eine Laufkatze und mindestens ein Hebezeug (69) angeordnet sind.

13. Eine Gondelverkleidung zum Abdecken einer Gondelrahmenstruktur einer Windkraftanlage umfasst eine Vielzahl von Abdeckplatten (75), wobei jede der Abdeckplatten (75) direkt an der modularen Gondelrahmenstruktur (12) gemäß Anspruch 1 über ein Haltersystem montiert ist (76).

14. Eine Gondelverkleidung nach Anspruch 13, **wobei** das Haltersystem (76) mehrere über die modulare Rahmenstruktur (12) verteilt angeordnete Verkleidungsverbindungen (77) umfasst, wobei die Verkleidungsverbindungen (77) flexibel sind zum Ausgleich von Spannungen aufgrund von Toleranzen zwischen der modularen Gondelrahmenstruktur (12) und der Gondelverkleidung (9).

15. Eine Gondel einer Windkraftanlage umfassend einen Hauptrahmen, einen Trägerrahmen und eine modulare Gondelrahmenstruktur nach einem der Ansprüche 1 bis 12, wobei der Hauptrahmen (65) innerhalb des Rotorseitenrahmenmoduls (13) angeordnet ist und der Trägerrahmen (66) innerhalb mindestens eines Zwischenrahmenmoduls (14) und einer Gondelverkleidung (9) nach Anspruch 13 oder 14 angeordnet ist.

16. Windkraftanlage mit einer Gondel (3) nach Anspruch 15.

17. Verfahren zur Erzeugung elektrischer Energie, **charakterisiert durch** die Bereitstellung einer Windkraftanlage nach Anspruch 16.

## Revendications

1. Structure de cadre de nacelle modulaire (12) pour une nacelle (3) d'éolienne (1) comprenant une multiplicité de modules de châssis (13, 14, 15) avec un côté avant et un côté arrière construits de la même manière, la majorité des modules de châssis comprenant les éléments suivants:
- un côté rotor module de châssis (13);
- au moins un module de châssis intermédiaire (14), un module de châssis intermédiaire (14) étant relié au module de châssis côté rotor (13) et
- un module de châssis d'extrémité (15) connecté à l'un desdits modules de châssis intermédiaires (14); et
étant à l'état assemblé et en vue de face
- le module de châssis côté rotor (13) comporte ce qui suit:
-- un profil de base en Y (16) s'étendant dans la direction y,
-- un profilé vertical (17) côté rotor, qui est relié au profilé de base en Y (16) par un point de raccordement d'angle (18) côté pieds,
-- un profilé horizontal côté toit (19) s'étendant dans la direction x, dont une extrémité est reliée au profilé vertical côté rotor (17) via un point de raccordement d'angle côté toit (20),
-- un profilé vertical (21) s'étendant dans la direction z, dont une extrémité est reliée à l'extrémité opposée du profilé horizontal côté toit (19) via un point de raccordement côté toit (22) et
-- un profilé diagonal (23) dont une extrémité est reliée au joint d'angle côté toit (20) et dont l'autre extrémité est reliée à l'autre extrémité du profilé vertical (21) par l'intermédiaire d'un joint côté base (24) et
-- un profilé de toit en Y (25) qui s'étend dans la direction y et est relié au profilé vertical côté rotor (17) via le joint d'angle côté toit (20);
- l'un des modules de châssis intermédiaires (14) comporte:
-- un profilé horizontal côté toit (29) s'étendant dans la direction x, qui est relié au module de cadre côté toit (13) via le point de raccordement côté toit (22),
-- un profilé vertical (30) s'étendant dans la direction z, qui est disposé via un point de raccordement côté toit (22a) et un point de raccordement côté fond (24a) entre les faces frontales du profilé horizontal côté toit (29) et
-- un profilé diagonal (31), qui est relié au point de raccordement côté toit (22) et au point de raccordement côté base (24a).
-- un profilé de toit en Y (32) qui s'étend dans la direction y et est relié au profilé vertical (21) via le point de raccordement côté toit (22);
- le module de cadre d'extrémité (15) comporte :
-- un profilé de base x (36) s'étendant dans la direction x, qui est relié au module de cadre intermédiaire (14) via le point de raccordement côté base (24a),
-- un profilé horizontal (37) sur le toit, qui s'étend dans la direction x et est relié au module de cadre intermédiaire (14) via un point de raccordement (22a) sur le toit,
-- un profilé d'extrémité vertical (38) s'étendant dans la direction z, qui est disposé via un point de raccordement d'angle côté fond (39) entre les faces frontales du profilé de base en X (36) et le profilé horizontal côté toit (37) via un point de raccordement d'angle côté toit (40) et
-- un profilé diagonal (41) dont une extrémité est reliée au point de raccordement côté toit (22a) et dont l'autre extrémité est reliée au point de raccordement d'angle côté base (39).
- Un profilé de toit en Y (43) s'étendant dans la direction y, qui est relié au profilé vertical (30) via le point de raccordement (22a) sur le toit.

2. Structure de cadre de nacelle modulaire selon la revendication 1, dans laquelle une fois assemblée et vue de face
- le module de châssis côté rotor (13) comporte ce qui suit:
-- comme le profil vertical côté rotor (17), un profil vertical de traction côté rotor (17-T),
-- comme le profil horizontal côté toit (19), un profil de traction horizontal côté toit (19-T),
-- comme le profil vertical (21) un profil de pression vertical (21-P),
-- comme le profil diagonal (23), un profil de pression diagonal (23-P);
- l'un des modules de châssis intermédiaire comporte :
-- comme le profil horizontal côté toit (29), un profil de traction horizontal côté toit (29-T),
-- comme le profil vertical (30) un profil de pression vertical (30-P),
-- comme le profil en diagonale (31), un profil de traction en diagonale (31-T);
- a le module de cadre d'extrémité (15).
-- comme le profil de base x (36) un profil de pression de base x (36-P),
-- comme le profil horizontal côté toit (37), un profil neutre horizontal côté toit (37-N),
-- comme le profil vertical d'extrémité (38), un profil vertical d'extrémité neutre (38-N),
-- comme le profil diagonal (41), un profil diagonal de traction (41-T).

3. Structure de cadre de nacelle modulaire selon la revendication 1 ou 2, **dans laquelle** le point de connexion côté toit (22, 22a) a une forme trapézoïdale, dans laquelle une pluralité d'alésages pour connecter un profilé sont disposés dans une zone centrale et sur une droite, côté.

4. Structure de cadre de nacelle modulaire selon l'une quelconque des revendications 1 à 3, dans laquelle les points de connexion côté base (24, 24a) sont en forme de V, une pluralité de trous pour la connexion d'un profilé étant agencés dans la zone médiane et dans la zone de gauche.

5. Structure de cadre de nacelle modulaire selon l'une quelconque des revendications 1 à 4, **dans laquelle** le point de raccordement d'angle côté base (39) est en forme de V, plusieurs perçages pour le raccordement d'un profilé étant disposés dans une zone centrale et dans une zone gauche.

6. Structure de cadre de nacelle modulaire selon l'une quelconque des revendications 1 à 5, **dans laquelle** le point de raccordement d'angle (20) sur le toit a une configuration angulaire, en particulier rectangulaire, plusieurs perçages pour le raccordement d'un profilé étant disposés dans une zone verticale et dans une zone horizontale.

7. Structure de cadre de nacelle modulaire selon l'une quelconque des revendications 1 à 6, **dans laquelle** sur le côté toit de chaque module de châssis (13, 14, 15), un profilé de toit en Y s'étendant dans la direction y pour relier les profilés latéraux de toit horizontaux (19, 29, 37) de chaque module de châssis (13, 14, 15) et des profilés de toit en diagonale entre les profilés de toit en Y (26, 27, 33, 34, 44, 45).

8. Structure de cadre de nacelle modulaire selon l'une quelconque des revendications 1 à 7, **dans laquelle** un cadre de base (42) du module avant (15) comprend ce qui suit : deux profilés de base en x (36), en particulier des profilés de pression , au moins deux profilés de base en y (49, 50) s'étendant dans la direction y, avec un profil de base en Y (50) dans la section médiane du module de cadre d'extrémité (15) et le profil d'extrémité de base en Y (49) est disposé dans la section d'extrémité du module de cadre d'extrémité (15), et des profils diagonaux croisés (51), celles-ci étant disposées entre le profil d'extrémité de base en Y (49) et le profil de base en Y (50).

9. Structure de cadre de nacelle modulaire selon l'une quelconque des revendications 1 à 8, **dans laquelle** chacun des points de connexion ainsi que les points de connexion d'angle sont vissés.

10. Structure de cadre de nacelle modulaire selon l'une des revendications 1 à 9, **dans laquelle** une grue (67) pour soulever des composants lourds d'une éolienne (1) est agencée à l'intérieur de la structure de cadre de nacelle (12), comprenant des profilés en C sur le des profilés horizontaux côté toit (19, 29) (71) sont agencés avec une surface de roulement intérieure.

11. Structure de cadre de nacelle modulaire selon la revendication 10, **dans laquelle une traverse (68) est disposée entre les profilés en C (71) et dans laquelle au moins une grue élévatrice (69) de démontage peut être** montée sur la traverse (68) afin de démonter un composant d'une éolienne dans une position de transport horizontale.

12. Structure de cadre de nacelle modulaire selon l'une quelconque des revendications 10 à 11, **dans laquelle** pour réduire la hauteur de la nacelle, des rails pour au moins un chariot et au moins un élévateur à grue (69) sont disposés sur le côté de la traverse (68).

13. Un carénage de nacelle pour recouvrir une structure de cadre de nacelle d'une éolienne comprend une pluralité de panneaux de couverture (75), chacun des panneaux de couverture (75) étant monté directement sur la structure de cadre de nacelle modulaire (12) selon la revendication 1 via un support système (76).

14. Carénage de nacelle selon la revendication 13, **dans lequel le système de support (**76) comprend une pluralité de joints de carénage (77) répartis dans toute la structure de châssis modulaire (12), les joints de carénage (77) étant flexibles pour s'adapter aux contraintes dues aux tolérances entre les structure modulaire de cadre de nacelle (12) et le carénage de nacelle (9).

15. Nacelle d'éolienne comprenant un châssis principal, un châssis de support et une structure de châssis de nacelle modulaire selon l'une quelconque des revendications 1 à 12, dans laquelle le châssis principal (65) est situé à l'intérieur du module de châssis côté rotor (13) et le châssis de support (66) est situé à l'intérieur d'au moins un module de cadre intermédiaire (14) et un carénage de gondole (9) selon la revendication 13 ou 14 est agencé.

16. Eolienne à nacelle (3) selon la revendication 15.

17. Procédé de génération d'énergie électrique, **caractérisé par** la fourniture d'une éolienne selon la revendication 16.
